Europäisches Patentamt

European Patent Office

Office européen des brevets

(11) Publication number: **0 299 805**
**A2**

# (12) EUROPEAN PATENT APPLICATION

(21) Application number: **88306568.2**

(22) Date of filing: **18.07.88**

(51) Int. Cl.⁴: **F 16 F 1/26**
**B 62 K 19/18**

(30) Priority: **17.07.87 ZA 875241    03.09.87 ZA 876574**

(43) Date of publication of application:
**18.01.89 Bulletin 89/03**

(84) Designated Contracting States:
**AT BE CH DE ES FR GB GR IT LI NL SE**

(71) Applicant: **INTERNATIONAL BICYCLE CORPORATION**
**P.O. Box 71**
**Craigmuir Chambers Road Town Tortola  (VG)**

(72) Inventor: **Coetzee, Abel Olwagen**
**117 Witfontein**
**Pretoria North Transvaal Province  (ZA)**

**Howcroft, David Parkinson**
**296 Sunrise Avenue North Riding**
**Randburg Transvaal Province  (ZA)**

(74) Representative: **Crisp, David Norman et al**
**D. YOUNG & CO. 10 Staple Inn**
**London, WC1V 7RD  (GB)**

(54) **Leaf spring and clamping means.**

(57) A leaf spring blade has hump formations at least at each end, and preferably also in the middle. These hump formations co-operate with a clamp to enable the clamping the blade to form the sole connecting member between the front and rear wheel assemblies of a bicycle frame.

EP 0 299 805 A2

Bundesdruckerei Berlin

**Description**

**Leaf Spring and Clamping Means**

This invention relates to a leaf spring and clamping means therefor.

In particular, this invention relates to a leaf spring which may advantageously be used to form part of a framework joining the front and rear wheel assemblies of a bicycle. One such arrangement is the subject matter of a South African Patent No 86/1554. A difficulty with such an arrangement is that the clamping of the leap spring ends by means of bolts passing through the blade can give rise to weaknesses, particularly at the blade ends. Further the framework cannot be easily assembled and stripped down.

We have now found it possible to provide a leaf spring and clamping means which can alleviate these difficulties.

In accordance with this invention there is provided a leaf spring blade having a raised formation at at least one end which is arranged to co-operate with a clamp for holding the blade by engaging it, with the formation preventing axial withdrawal of the blade from the clamp passed elements of the clamp.

Preferably the raised formation is an approximately uniform curve in one blade surface about an axis transverse to the blade length.

Further preferably the blade surface has an open ended channel recess opposite the raised formation and following the curve of the raised formation.

Further features of the invention provide for there to be a formation and oppositely located channel recess at each end of the blade, just removed from the end edge of the blade, and for the blade to be arranged to form the sole frame member connecting the front and rear wheel assemblies of a bicycle.

For use with a bicycle, there is provided for the blade to have a third formation approximately in the centre, and arranged to receive a clamp supporting a bicycle pedal crank and box assembly.

Alternatively, the blade may have an opening through its centre for receiving a pedal box assembly under it with a seat stalk projecting through the opening, the stalk carrying clamping means for clamping the blade between the assembly box and the means.

The invention extends to a clamp for a leaf spring blade as defined above comprising two clamping edges supported to be located operatively one on each side of, and approximately parallel to, the raised formation, and a clamping plate supported relative to the clamping edges to be movable towards the area between the edges, to clamp operatively against the blade on the opposite side of the raised formation, and to be releasable from this position to allow insertion and removal of the leaf spring end between plate and clamping edges.

There is provided for the clamp edges to be supported between side supports arranged to be operatively located adjacent the side edges of the blade end, and for the clamping plate to be screwable to and from a clamping position, by screws through a backing strut secured across the side supports on the opposite side thereof to the clamping edges.

Preferably the clamping plate is shaped to follow the curvature of the channel shaped transverse recess in the rear side of the raised formations.

Preferred embodiments of the invention are described below by way of example only, and with reference to the accompanying drawings, in which:

Figure 1 is an isometric view of a leaf spring blade according to the invention;

Figure 2 is a view of a bicycle utilising the leaf spring of Figure 1;

Figure 3 is an isometric view of a clamp for securing a pedal box assembly to the middle of the blade of Figure 1;

Figure 4 is an isometric view of a clamp for securing the ends of a spring blade of Figure 1;

Figure 5 is a cross-sectional view of an alternative clamping device according to the invention;

Figure 6 is an isometric top view of the embodiment of Figure 5; and,

Figure 7 is an isometric bottom view of the embodiment of Figure 5.

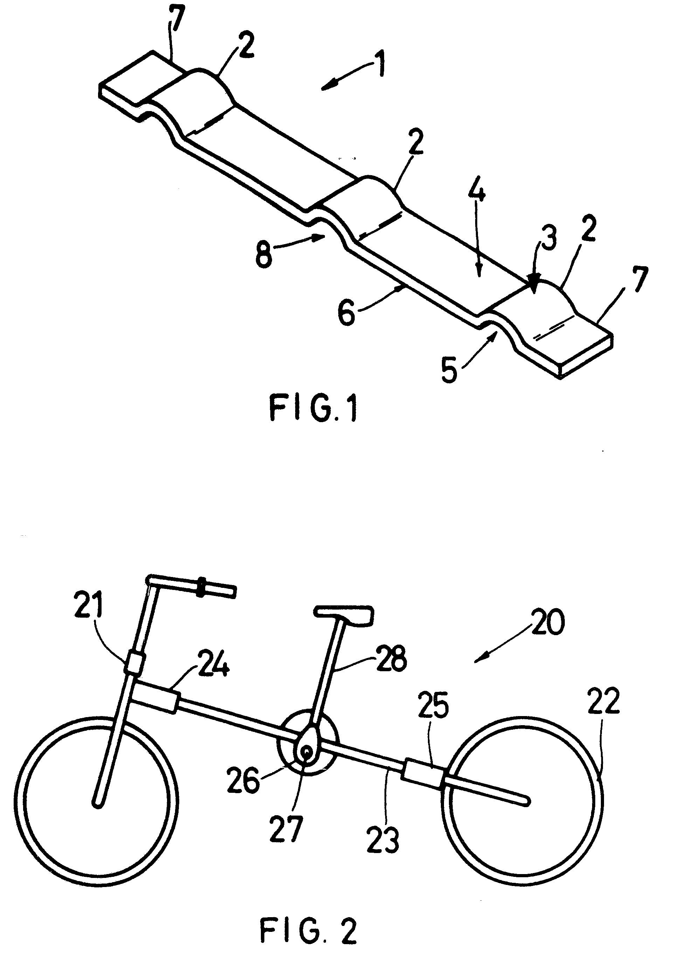

Referring to Figure 1, a leaf spring (1) comprises an elongate flat fibre reinforced plastics (FRP) blade, having formations (2) at each end and in the middle for enabling it to be clamped at these positions. Each of the formations (2) are the same and comprise a rounded bend in the blade, with the bend axis running normally to the blade length. The bend leaves a raised hump formation (3) running across the operatively upper surface (4) of the blade, and a corresponding channel shaped recess (5) running normal to the blade length on the operatively lower side (6) of the blade. Each of the formations (2) are located a short distance (7) from the ends of the blade.

Referring to Figure 2, a bicycle (20) is illustrated having a front wheel assembly (21) and a rear wheel assembly (22). The two assemblies are secured together solely by a leaf spring (23) which is of the type described with reference to Figure 1. A clamp (24) secures the front end of the blade to the front wheel assembly (21) and a similar clamp (25) clamps the rear end of the blade of the rear wheel assembly (22). In the middle of the blade and the bicycle, a clamp (26) secures the pedal box and crank housing (27) to the middle formation (2) (Figure 1) of the spring, and the housing also supports a seat and stalk (28).

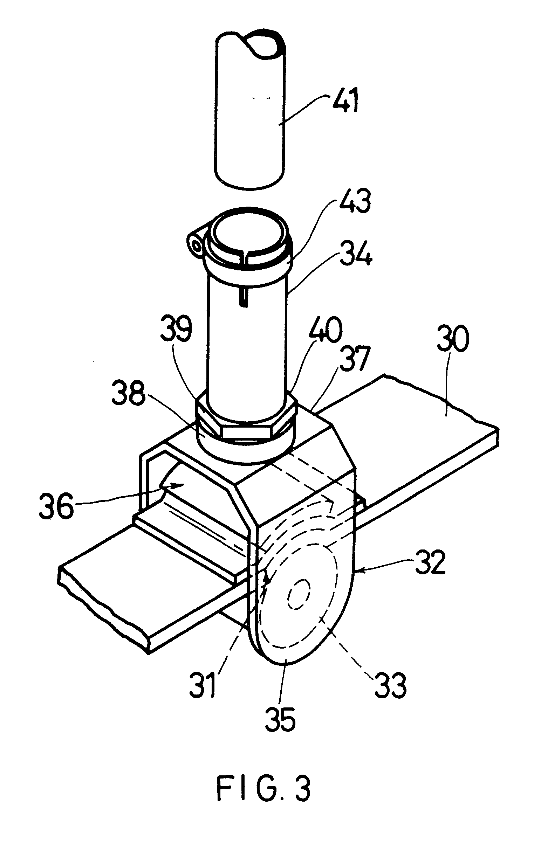

Referring to Figure 3, the middle section (30) of a blade as described with reference to Figure 1 is shown. The middle section (30) has its formation (31) arranged to have a clamp (32) clamped thereabout to support a pedal housing (33) and a seat stalk support section (34). The clamp (32) comprises a roughly U-shaped bracket (35) which is located in operatively upside down manner with the downwardly depending arms of the U-shape located each side of the spring (30), and secured to each respective end of the housing (33). The bracket is thus slid over one end of the blade so that it is located with the housing which fits within the recess (5) (Figure 1) of the formation (31), operatively underneath the blade. A plastics material spacer and bearing plate (36) is located over the hump of the formation (31) between the spring and the inside of the bracket.

The operatively uppermost section of the bracket, being the cross-piece (37) of the U, holds a threaded boss (38) which receives the threaded portion (39) of the tubular seat stalk section (34). The seat stalk section has a nut portion (40) secured therearound to enable the stalk to be screwed through the boss into the clamping mechanism, to drive the bearing plate (36) hard down on the top of the hump and simultaneously pull the pedal housing tightly into the hump recess thus clamping the pedal housing tightly against the spring. The full length of the seat stalk, with only one end (41) being shown, is inserted in telescopic manner inside the tubular stalk section (34), and clamped via a screw clamp (43) as is known per se.

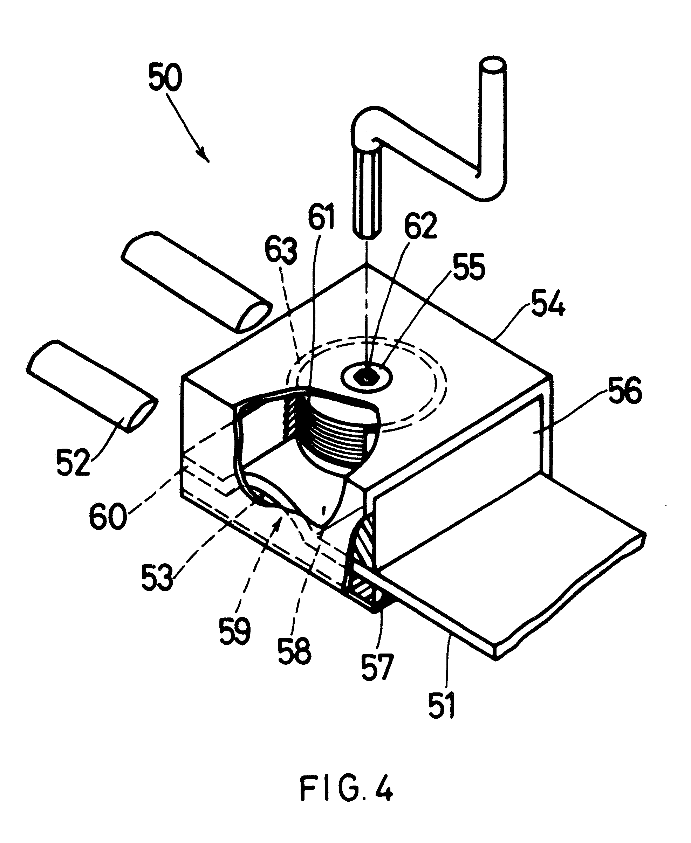

Referring now to Figure 4, a clamp (50) is shown in use for securing an end (51) of a blade according to Figure 1, relative to a fixed framework (52), for example the front assembly of a bicycle as described with reference to Figure 2. The blade end (51) is provided with a raised transverse hump formation (53), in the same configuration as the formations (2) of Figure 1. The clamp comprises a tubular box section (54) having a central opening (55) in the operatively upper box side thereof, and an upper and lower plastics material bearing plate (56) and (57) respectively. The upper plate (56) has a channel shaped recess (58) therein to fit snugly over the top of the hump (53), and the lower plate (57) has a corresponding curved hump shape (59) for location within the channel shaped recess under the lower side of the formation. The two plates (56) and (57) fit neatly over and under the formation (53) respectively to form a block at this end flush with the end edge (60) of the blade. The block has cross-sectional dimensions which enable it to be snugly slid into the tubular box (54). The upper bearing plate (56) carries a large headless screw (61), rather in the manner of a grub screw, which has an Allen key opening (62) therein. The screw (61) screws into a bushing (63) which is set within the plastics material. To insert the spring into the clamp, the upper and lower blocks are located and slid into the tubular box to have the Allankey opening (62) located within the opening (55). The screw is then scewed out of the plate (56) in the usual direction for loosening screws, to cause the upper surface to drive against the inside of the box section and clamp the plate (56) downwardly onto the spring and the lower bearing plate (57).

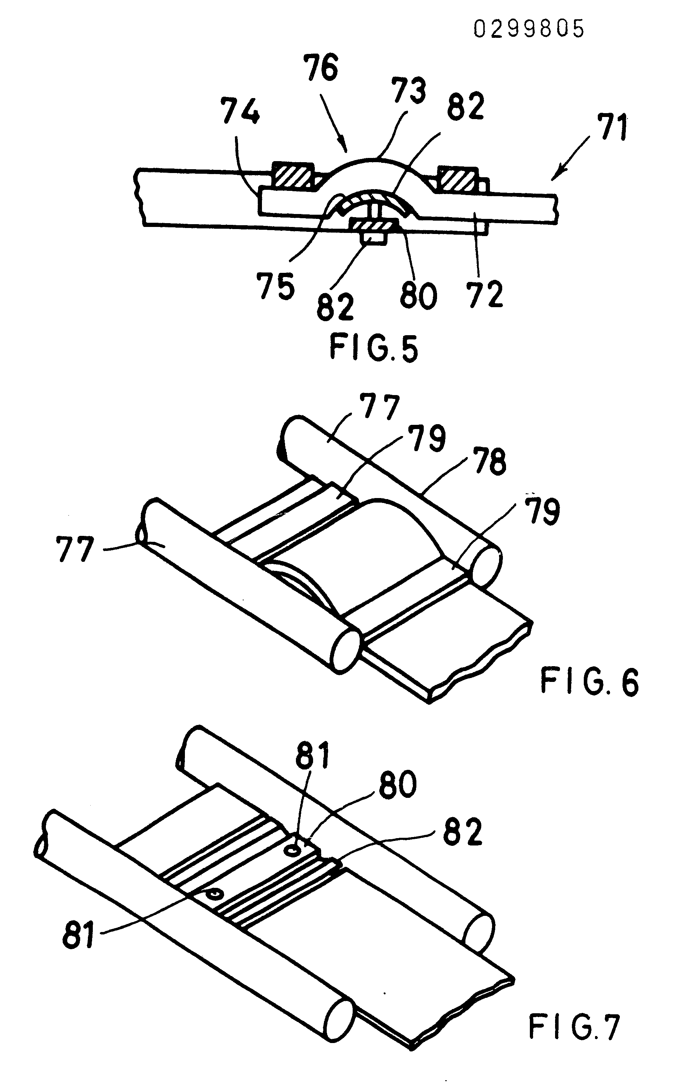

Referring to Figures 5 to 7, a single leaf spring is shown indicated generally by numeral (71), having an end (72) which has a transverse hump (73) running across it just short of the end edge (74). The transverse hump (73) has a corresponding transverse channel recess (75) on the opposite side, following the contour of the raised portion. A clamping device indicated generally by numeral (76) is provided for clamping this end. The device has two tubular side supports (77) parallel and spaced apart from each other and on one side (78) thereof, are located two cross struts (79) spaced apart in the length of the supports by a distance erqual to the width of the raised portion (73) on the leaf spring. On the opposite side of two supports (Figure 7) is located a backing cross strut (80) located centrally between the two supports (79) on the opposite sides. The backing strut (80) has two screw openings (81) for receiving screws (not shown) which operate to screw down on a curved clamping plate (82), having a contour corresponding to the contour of the channel (75).

In use, the cross struts (79) form clamping edges, and the backing strut (80) is sufficiently far apart from them on the opposite side of the side supports, to allow insertion of the leaf spring end (72) with the hump protruding between the two clamping edges, and the channel (75) of the hump located opposite the backing strut (80). The clamping plate can then be inserted into the channel (75) with the screws screwed out. The clamping edges rest against the flat portion of the spring on each side of the hump (73), and the screws are screwed down to force the backing plate into the channel shape (75), and thus clamp the spring between the blade and the clamping edges

## Claims

1 A leaf spring blade having a raised formation towards at least one end which is arranged to co-operate in use, with a clamp for holding the blade by engaging it, with the formation preventing axial withdrawal of the blade from the clamp past elements of the clamp.

2 A blade as claimed in Claim 1 in which the raised formation is an approximately uniform curve in one blade surface about an axis transverse to the blade length.

3 A blade as claimed in Claim 2 in which the blade surface has an open ended channel recess opposite the raised formation which follows the curve of the raised formation.

4 A blade as claimed in Claim 2 or 3 in which there is a formation and oppositely located channel recess at each end of the blade, just removed from the blade edge.

5 A blade as claimed in any preceding claim in which the blade is arranged to form the sole frame member connecting the front and rear wheel assemblies of a bicycle.

6 A blade as claimed in claim 5 in which the blade has a raised formation at both ends thereof and has a third formation approximately in the centre, and arranged to receive a clamp supporting a bicycle pedal crank and box assembly.

7 A blade as claimed in Claim 5 in which the blade has an opening through the centre thereof for receiving a bicycle pedal box and crank assembly thereunder with a seat stalk mounting through the opening, and carrying clamping means clamping the blade between box and means.

8 A clamp for a leaf spring blade as claimed in any one of Claims 1 to 7, comprising two clamping edges supported to be located operatively one on each side of, and approximately parallel to, the raised formation, and a clamping plate supported relative to the clamping edges to be movable towards the area between the edges, to clamp operatively against the spring on the opposite side of the raised formation, and to be releasable from this position to allow insertion and removal of the leaf spring end between plate and clamping edges.

9 A clamp as claimed in Claim 8, in which the clamp edges are supported between side supports arranged to be operatively located adjacent the side edges of the blade end.

10 A clamp as claimed in Claim 9 in which the clamping plate is screwable to and from a clamping position by screws through a backing strut secured across the side supports on the opposite side thereof to the clamping edges.

11 A clamp as claimed in any one of claims 8 to 10 in which the clamping plate is shaped to follow the curvature of a channel shaped transverse recess in the rear side of the raised formations.

12 A clamp as claimed in Claim 8 in which the clamping edges are within a tubular housing arranged to fit around the blade, the operative underside of the housing forming the clamping plate and being movable by means of a screw device operable between the clamping edges and the operative upperside of the housing to unscrew in use and press the edges down onto the blade and draw the clamping plate up underneath.

13 A clamp as claimed in Claim 12 in which the housing is a rectangular section tube, with clamping edges in the form of a block having a recess shaped to accommodate the raised formation, and the clamping plate also having a block shaped to fit in the recess behind the raised formation and support it.

14 A bicycle incorporating a leaf spring blade according to any one of claims 1 to 7.

15 A bicycle according to claim 14 incorporating a clamp according to any one of claims 8 to 13.

0299805

FIG.1

FIG. 2

0299805

FIG. 3

0299805

FIG. 4

0299805

FIG.5

FIG. 6

FIG.7